(19) Europäisches Patentamt
European Patent Office
Office européen des brevets

(11) EP 2 125 657 B1

# (12) EUROPÄISCHE PATENTSCHRIFT

(45) Veröffentlichungstag und Bekanntmachung des Hinweises auf die Patenterteilung:
**07.09.2011 Patentblatt 2011/36**

(21) Anmeldenummer: **08716069.3**

(22) Anmeldetag: **27.02.2008**

(51) Int Cl.:
***C04B 26/04*** $^{(2006.01)}$ ***C08F 2/44*** $^{(2006.01)}$

(86) Internationale Anmeldenummer:
**PCT/EP2008/001534**

(87) Internationale Veröffentlichungsnummer:
**WO 2008/104378 (04.09.2008 Gazette 2008/36)**

## (54) HÄRTBARE POLYMERMISCHUNG

CURABLE POLYMER MIXTURE

MÉLANGE DE POLYMÈRES DURCISSABLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.02.2007 DE 102007009754**

(43) Veröffentlichungstag der Anmeldung:
**02.12.2009 Patentblatt 2009/49**

(73) Patentinhaber: **Byk-Chemie GmbH**
**46483 Wesel (DE)**

(72) Erfinder:
- **NAGELSDIEK, René**
  **46499 Hamminkeln (DE)**
- **PRITSCHINS, Wolfgang**
  **46487 Wesel (DE)**
- **GÖBELT, Bernd**
  **46487 Wesel (DE)**
- **GREEFRATH, Dorothée**
  **45470 Mülheim an der Ruhr (DE)**
- **REMME, Stephan**
  **47475 Kamp-Lintfort (DE)**
- **ESSER, Andrea**
  **46485 Wesel (DE)**

(74) Vertreter: **Kutzenberger, Helga et al**
**Kutzenberger & Wolff**
**Patentanwaltssozietät**
**Theodor-Heuss-Ring 23**
**50668 Köln (DE)**

(56) Entgegenhaltungen:
**EP-A- 0 224 122** **EP-A- 0 451 709**
**WO-A-98/28307** **US-A- 3 681 287**

- **DATABASE CA [Online] CHEMICAL ABSTRACTS SERVICE, COLUMBUS, OHIO, US; WATANABE, YASUO ET AL: "Colored acrylic concretes" XP002480221 gefunden im STN Database accession no. 1988:151817 & JP 62 275048 A (MITSUI PETROCHEMICAL INDUSTRIES, LTD., JAPAN) 30. November 1987 (1987-11-30)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 125 657 B1

## Beschreibung

Die vorliegende Erfindung betrifft eine härtbare Polymermischung, vorzugsweise härtbare Polymerbetonmischung umfassend wenigstens ein mindestens oligomeres Additionsprodukt a) von wenigstens einem mindestens eine hydrolysierbare Silangruppe aufweisendes Aminosilan und/oder Thiosilan an mindestens eine mindestens zwei endständige, ethylenisch ungesättigte Doppelbindungen aufweisenden Verbindung und/oder mindestens ein mindestens oligomeres Additionsprodukt b) von wenigstens einem wenigstens eine hydrolysierbare Silangruppe aufweisendes Isocyanatsilan und/oder Epoxysilan an mindestens eine wenigstens eine endständige Hydroxygruppe oder endständige Aminogruppe und wenigstens eine endständige, ethylenisch ungesättigte Doppelbindung aufweisende Verbindung als Vermittleradditv 1.), ein durch radikalische Polymerisation härtbares System umfassend wenigstens ein ethylenisch ungesättigtes Polymeres und/oder ein (Meth)acrylharz, mindestens ein ethylenisch ungesättigtes Monomeres, mindestens einen Radikalstarter und ggf. wenigstens einen Vemetzer als Bindemittel 2.), wenigstens 20 Gew.%, bezogen auf das Gesamtgewicht der Komponenten 1.) bis 4.) der Polymermischung, anorganische, vorzugsweise multipartikulare Füllstoffe als Zuschlagstoffe 3.) und ggf. übliche Hilfsstoffe 4.).

Härtbare Polymermischungen unterschiedlicher Zusammensetzung werden vielfältig verwendet, u. a. auch zur Herstellung von Polymerbeton.

Polymerbetone sind bekannte Materialien, die im Gegensatz zu normalen Beton ein Polymer als Bindemittel aufweisen, das die Gesteinskömung, die s. g. Zuschlagsstoffe, zusammenhält. Die Zuschlagsstoffe können die unterschiedlichste Gesteinskömung aufweisen und werden üblicherweise vom Feinstkombereich bis zur Grobkömung eingesetzt. Dies erlaubt, je nach Mischung der verschiedenen Korngrößen Füllgrade bis zu 95 Gew.%. Als polymere Bindemittel werden vorzugsweise ethylenisch ungesättigte Polymere eingesetzt, die nach Aushärtung die Polymermatrix, in der die Zuschlagsstoffe verteilt sind, den Polymerbeton ergeben. Für die Qualität eines Polymerbetons ist es wichtig, dass er ausgezeichnete mechanische Eigenschaften, wie Biegefestigkeit, Zugfestigkeit, Druckfestigkeit und Schlag-Biege-Festigkeit, neben einem ausreichenden E-Modul aufweist, was nur durch eine sehr gute Wechselwirkung, d. h. Haftung, zwischen der Polymermatrix und den Zuschlagsstoffen, die mit Hilfe der Polymermatrix verbunden werden, zustande kommt. Je besser diese Wechselwirkung ist, um so höher ist die Güte des Polymerbetons. Dies gilt auch für andere, härtbare Polymermischungen mit insbesondere hohem Füllgrad. Darüber hinaus ist von entscheidender Bedeutung, dass sich die noch nicht ausgehärtete Polymerbetonmischung rasch ausbreitet, d. h. ein ausgezeichnetes Ausbreitmaß hat, was u. a. durch eine ausreichend niedrige Viskosität der Polymermischung erzielbar ist. Trotz eines ausgezeichneten Ausbreitmaßes sollte aber auch eine rasche Aushärtung der zu härtenden Polymermischung noch möglich sein.

Für viele Einsatzgebiete weisen die bekannten Polymerbetonmischungen nicht die gewünschten vorstehend aufgeführten Verarbeitungseigenschaften bzw. die daraus erhaltenen Polymerbetone nicht immer die vorstehend aufgeführten mechanischen Eigenschaften in einem zufriedenstellenden Maß auf.

Aufgabe der vorliegenden Erfindung war daher, härtbare Polymermischungen, vorzugsweise Polymerbetonmischungen, zur Verfügung zu stellen, die aufgrund ihrer Viskosität eine verbesserte Verarbeitung, d. h. eine erhöhtes Ausbreitmaß gewährleisten und die daraus hergestellten gehärteten Polymermassen, vorzugsweise Polymerbetone gegenüber den vorbekannten Produkten verbesserte mechanische Eigenschaften aufweisen.

Diese Aufgabe wird durch das zur Verfügung Stellen der erfindungsgemäßen härtbaren Polymermischung, vorzugsweise härtbaren Polymerbetonmischung, gelöst, die

1.) wenigstens ein mindestens oligomeres Additionsprodukt a) von wenigstens einem mindestens eine hydrolysierbare Silangruppe aufweisendes Aminosilan und/oder Thiosilan an mindestens eine Verbindung, die mindestens zwei endständige, ethylenisch ungesättigte Doppelbindungen als einzige Endgruppen aufweist, und/oder wenigstens ein mindestens oligomeres Additionsprodukt b) von wenigstens einem wenigstens eine hydrolysierbare Silangruppe aufweisendes Isocyanatsilan und/oder Epoxysilan an mindestens eine wenigstens drei Struktureinheiten aufweisende, oligomere Verbindung, die wenigstens eine endständige Hydroxygruppe oder endständige Aminogruppe und wenigstens eine endständige, ethylenisch ungesättigte Doppelbindung aufweist, als Vermittleradditiv 1.),

2.) ein durch radikalische Polymerisation härtbares System umfassend wenigstens ein ethylenisch ungesättigtes Polymeres und/oder ein (Meth)acrylharz, mindestens ein ethylenisch ungesättigtes Monomeres, mindestens einen Radikalstarter und ggf. wenigstens einen Vemetzer als Bindemittel

3.) wenigstens 20 Gew.%, bevorzugt wenigstens 40 Gew.%, ganz besonders bevorzugt wenigstens 60 Gew.%, insbesondere bis zu 95 Gew.%, bezogen auf das Gesamtgewicht der Komponenten 1.) bis 4.) der Polymermischung, anorganische, vorzugsweise multipartikulare Füllstoffe als Zuschlagstoffe und

4.) ggf. übliche Hilfsstoffe

umfasst.

Aus dem Stande der Technik sind bereits Additionsprodukte mit wenigstens einer hydrolysierbaren Silangruppe und einer endständigen ethylenisch ungesättigten Doppelbindung als Monomere in Formulierungen für Zahnfüllungen mit geringem Schrumpfverhalten (Macromolecules 2001, 34, 5778 - 5785) bekannt.

Weiterhin ist dem US-Patent 4,650,889 die Mitverwendung von Alkoxysilanen, die als Endgruppen ungesättigten Doppelbindungen aufweisen, in ungesättigten Polyestersystemen zur Verbesserung der Flexibilität von damit imprägnierten Glasfasermatten zu entnehmen.

JP 62 275048 offenbart eine härtbare Polymermischung, insbesondere eine Polymerbetonmischung, ohne besonderen hochmolekularen Vermittler.

WO98/28307 und EP0451709 beschreiben einige Vermittleradditive aus hochmolekularen Silanen aber weisen nicht auf eine Erhöhung der Biegefestigkeit, des Elastizitätsmoduls und des Ausbreitmasses bei der Anwendung dieser bestimmten Vermittleradditive hin.

EP0224122 und US3681287 beschreiben Polymerbetonmischungen mit alternativen hochmolekularen Vermittleradditiven.

Weder die verbesserte Verarbeitbarkeit der erfindungsgemäßen Polymermischungen, insbesondere Polymerbetonmischungen, noch die herausragenden mechanischen Eigenschaften der daraus erhaltenen, gehärteten Produkte, insbesondere der Polymerbetone, wird durch den zitierten Stand der Technik nahegelegt oder war zu erwarten.

Als Komponente 1.) bzw. als Vermittleradditive werden Additionsprodukte mit wenigstens einer hydrolysierbaren Silangruppe und wenigstens einer endständigen ethylenisch ungesättigten Doppelbindung in den erfindungsgemäßen härtbaren Polymermischungen, vorzugsweise Polymerbetonmischungen, eingesetzt.

Vorzugsweise wird als oligomeres, vorzugsweise polymeres Additivprodukt

a) wenigstens ein oligomeres, vorzugsweise polymeres Additionsprodukt von wenigstens einem mindestens eine hydrolysierbare Silangruppe aufweisendes Aminosilan und/oder Thiosilan an mindestens eine mindestens oligomeren Verbindung, die mindestens zwei endständige, ethylenisch ungesättigte Doppelbindungen als einzige Endgruppen aufweist,

und/oder

b) wenigstens ein, mindestens oligomeres vorzugsweise polymeres Additionsprodukt von wenigstens einem mindestens eine hydrolysierbare Silangruppe aufweisenden Isocyanatsilan und/oder Epoxysilan an mindestens eine mindestens oligomere, vorzugsweise polymere, wenigstens eine endständige Hydroxygruppe oder endständige Aminogruppe und wenigstens eine endständige, ethylenisch ungesättigte Doppelbindung aufweisende Verbindung

eingesetzt.

Als Verbindungen, die wenigstens eine hydrolysierbare Silangruppe aufweisen, können vorzugsweise Verbindungen der allgemeinen Formel

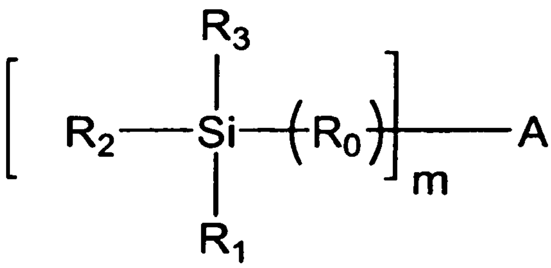

eingesetzt werden, in der

A für eine Epoxidgruppe, eine Glycidyloxygruppe, eine Isocyanatgruppe, eine Gruppe -SH, oder eine Gruppe -N (H)-X steht, wobei X für Wasserstoff, einen Alkylrest mit 1 bis 6 C-Atomen, einen Arylrest mit 6 bis 10 C-Atomen oder eine Cycloalkylrest mit 4 bis 6 C-Atomen steht, wobei jeder dieser Reste X mit einer primären oder sekundären Aminogruppe substituiert sein kann, oder eine Bindung bedeutet, wenn m eine ganze Zahl 2 ist,

$R_0$ für einen Alkylenrest mit 1 bis 12 C-Atomen, eine Cycloalkylenrest mit 4 bis 6 C-Atomen oder einen Arylenrest mit 6 bis 10 C-Atomen steht,

$R_1$ für einen Alkylrest mit 1 bis 3 C-Atomen, ein Halogen, eine $-O-C(=O)R_4$ Gruppe oder eine $-OR_4$ Gruppe steht, wobei $R_4$ für Wasserstoff oder einen Alkylrest mit 1 bis 3 C-Atomen steht,

$R_2$ für einen Alkylrest mit 1 bis 3 C-Atomen, eine $-O-C(=O)-R_4$-Gruppe, ein Halogen oder eine $-OR_4$-Gruppe steht, wobei $R_4$ für Wasserstoff oder einen Alkylrest mit 1 bis 3 C-Atomen steht,

$R_3$ für eine $-O-C(=O)-R_4$-Gruppe, ein Halogen oder eine $-OR_4$-Gruppe steht, wobei $R_4$ für einen Alkylrest mit 1 bis 3 C-Atomen steht,

und für eine ganze Zahl 1 oder 2 steht.

Vorzugsweise werden als ein wenigstens eine hydrolysierbare Silangruppe aufweisendes Aminosilan wenigstens eine Verbindung ausgewählt aus der Gruppe umfassend 3-(N-Allylamino)propyltrimethoxysilan, 4-Aminobutyltriethoxysilan, 1-Amino-2-(dimethylethoxysilyl)propan, N-(2-Aminoethyl)-3-aminoisobutyldimethylmethoxysilan, N-(2-Aminoethyl)-3-aminoisobutyl-methyldimethoxysilan, (Aminoethylaminomethyl)phenethyltrimethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(6-Aminohexyl)aminomethyltrimethoxysilan, N-(6-Aminohexyl)aminopropyltrimethoxysilan, N-(2-Aminoethyl)-11-aminondecyltrimethoxysilan, 3-(m-Aminophenoxy)pro-pyltrimethoxysilan, m-Aminophenyltrimethoxysilan, p-Aminophenyltrimethoxysilan, N-3-[Amino(polypropylenoxy)]aminopropyltrimethoxysilan, 3-Aminopropyldiisopropylethoxysilan, 3-Aminopropyldimethylethoxysilan, 3-Aminopropylmethyldiethoxysilan, 3-Aminopropyltriethoxysilan, 3-Aminopropyltrimethoxysilan, 11-Aminoundecyltriethoxysilan, Bis(2-hydroxyethyl)-3-aminopropyltriethoxysilan, Bis(methyldiethoxysilylpropyl)amin, Bis(triethoxysilylpropyl)amin, Bis(trimethoxysilylpropyl)amin, Bis[(3-trimethoxysilyl) propyl]ethylendiamin, Bis(3-trimethoxysilylpropyl)-N-methylamin, n-Butylaminopropyltrimethoxysilan, t-Butylaminopropyltrimethoxysilan, N-Cyclohexylaminopropyltrimethoxysilan, 3-(2,4-Dinitrophenylamino)propyltriethoxysilan, N-Ethylaminoisobutylmethyldiethoxysilan, N-Ethylaminoisobutyltrimethoxysilan, N-(3-Methacryloxy-2-hydroxypropyl)-3-aminopropyltriethoxysilan, N-Methylaminopropylmethyldimethoxysilan, N-Methylaminopropyltrimethoxysilan, N-Phenylaminomethyltriethoxysilan, N-Phenylaminomethyltrimethoxysilan, 3-(N-Styrylmethyl-2-aminoethylamino)propyltrimethoxysilan, (3-Trimethoxysilylpropyl)diethylentriamin, (3-Triethoxysilylpropyl)diethylentriamin, N-Cyclohexylaminomethylmethyldiethoxysilan, N-Cyclohexylaminomethyltriethoxysilan, N-Phenylaminomethyltriethoxysilan und deren Mischungen eingesetzt.

Als ein wenigstens eine hydrolysierbare Silangruppe aufweisendes Thiosilan kann wenigstens eine Verbindung ausgewählt aus der Gruppe umfassend Mercaptomethylmethyldiethoxysilan, 3-Mercaptopropylmethyldimethoxysilan, 3-Mercaptopropyltriethoxysilan, 3-Mercaptopropyltrimethoxysilan und deren Mischungen eingesetzt werden.

Als ein wenigstens eine hydrolysierbare Silangruppe aufweisendes Isocyanatsilan kann wenigstens eine Verbindung ausgewählt aus der Gruppe umfassend 3-Isocyanatopropyldimethylchlorsilan, 3-Isocyanatopropyltriethoxysilan, 3-Isocyanatopropyltrimethoxysilan, (Isocyanatomethyl)methyldimethoxysilan und deren Mischungen eingesetzt werden.

Darüber hinaus kann als eine wenigstens eine hydrolysierbare Silangruppe aufweisende Epoxysilan-Verbindung eine Verbindung ausgewählt aus der Gruppe umfassend 2-(3,4-Epoxycyclohexyl)ethyltriethoxysilan, 2-(3,4-Epoxycyclohexyl)ethyltrimethoxysilan, 5,6-Epoxyhexyltriethoxysilan, 5,6-Epoxyhexyltrimethoxysilan, 5,6-Epoxyhexylmethyldimethoxysilan, 5,6-Epoxyhexylmethyldiethoxysilan, 5,6-Epoxyhexyldimethylethoxysilan, 5,6-Epoxyhexyldimethylmethoxysilan, (3-Glycidoxypropyl)dimethylethoxysilan, (3-Glycidoxypropyl)dimethylmethoxysilan, (3-Glycidoxypropyl) methyldiethoxysilan, (3-Glycidoxypropyl)methyldimethoxysilan, (3-Glycidoxypropyl)triethoxysilan, (3-Glycidoxypropyl) trimethoxysilan und deren Mischungen eingesetzt werden.

Als Reaktionspartner für die mindestens eine hydrolysierbare Silangruppe aufweisenden Aminosilane und/ oder Thiosilane eignen sich vorzugsweise zumindest oligomere Verbindungen, die endständige ethylenisch ungesättigte Doppelbindungen vorzugsweise als einzige Endgruppen aufweisen. Vozugsweise liegen diese endständigen Doppelbindungen als eine Acrylat-, Methacrylat- und/oder Allyl-gruppe vor.

Vorzugsweise sind die Verbindungen mit wenigstens zwei endständigen, ethylenisch ungesättigten Doppelbindungen polymere Verbindungen. Besonderes bevorzugt sind Verbindungen, die ausgewählt sind aus der Gruppe umfassend Polyether, Polyester, Polyesterpolyether, Polyamide, Polyesteramide, wobei erfindungsgemäß unter Polyester auch Polycarbonate verstanden werden, und die die entsprechenden Endgruppen aufweisen.

Als Polyether eignen sich Verbindungen mit der wiederkehrenden Struktureinheit

$$-[-O-W^1-]-$$

wobei $W^1$ ein aliphatischer Rest mit 1 bis 15 C-Atomen, bevorzugt mit 2 bis 8 C-Atomen, besonders bevorzugt mit 2 bis 4 C-Atomen, ein aromatischer oder cycloaliphatischer Ring oder eine aromatisch-aliphatische Gruppierung ist. Die Ethergruppierung kann auch Teil eines kettenständigen Ringes sein.

Bevorzugte Polyether sind Polyethylenoxide, Polypropylenoxide, Polybutylenoxide, Polystyroloxide, Ethylenoxid/Propylenoxid-Copolyether, Poly(tetrahydrofurane), die ggf. Bisphenol A-Einheiten in der Hauptkette enthalten, Copolyether der genannten Polyether-Einheiten oder Mischungen von wenigstens 2 der genannten Polyethern. Besonders bevorzugte Polyether sind Polyethylenoxide, Polypropylenoxide und Polyether aus Ethylenoxid/Propylenoxid. Bevorzugt weisen die Polyether ein Molekulargewicht von 100 bis 10000 g/mol, besonders bevorzugt von 150 bis 7500 g/mol, ganz besonders bevorzugt von 200 bis 3000 g/mol auf.

Als Polyester eigenen sich bevorzugt gesättigte Polyester , d. h. Polyester, die nicht ethylenisch ungesättigt sind, wie Polyester von Lactonen wie z. B. ε-Caprolacton und/oder δ-Valerolacton, sowie Polyester, die durch Kondensation von α,ω-Hydroxycarbonsäuren oder durch Kondensation von Dicarbonsäuren mit Diolen erhalten worden sind. Als Säurekomponenten können entweder Dicarbonsäuren, deren Säurehalogenide, Säureanhydride oder Ester eingesetzt werden, wobei besonders bevorzugt die Dicarbonsäuren Oxalsäure, Malonsäure, Dimethylmalonsäure, Bernsteinsäure, Glutarsäure, Adipinsäure, Trimethyladipinsäure, Pimelinsäure, 2,2-Dimethylglutarsäure, Azelainsäure, Sebacinsäure, 1,3-Cyclopentandicarbonsäure, 1,2-Cyclohexandicarbonsäure, 1,4-Cyclohexandicarbonsäure, Phthalsäure, Terephtalsäure, Isophthalsäure, 2,5-Norbomandicarbonsäure, 1,4-Naphthalindicarbonsäure, Diphensäure, 4,4'-Oxydibenzoesäure, Diglycolsäure, Thiodipropionsäure, 4,4'-Sulfonyldibenzoesäure, 2,5-Naphthalindicarbonsäure, Tricyclodecandicarbonsäure geeignet sind.

Geeignete Diole zur Umsetzung mit den gesättigten Dicarbonsäuren sind vorzugsweise Ethandiol, 1,2-Propandiol, 1,3-Propandiol, 1,2-Butandiol, 1,4-Butandiol, 1,2-Pentandiol, 1,4-Pentandiol, 2,4-Pentandiol, 1,2-Hexandiol, 1,5-Hexandiol, 1,6-Hexandiol, 2,5-Hexandiol, 1,7-Heptandiol, 1,8-Octandiol, Neopentylglycol.

Besonders bevorzugte Polyester sind Poly(ε-caprolacton), Poly(δ-valerolacton), Caprolacton/Valerolacton-Copolyester, Polylactid, Polyethylenterephthalat und Polybutylenterephthalat.

Unter Polyester werden erfindungsgemäß auch Polycarbonate mit der wiederkehrenden Struktureinheit

$$-[-W^2-O-C(=O)-O-]-$$

verstanden. Hierbei ist $W^2$ ein aliphatischer Rest mit 2 bis 15 C-Atomen, bevorzugt mit 2 bis 12 C-Atomen, besonders bevorzugt mit 2 bis 8 C-Atomen oder ein aromatischer oder cycloaliphatischer Rest oder eine aromatisch-aliphatische Gruppierung, vorzugsweise ein Bisphenol A-Rest oder davon abgeleiteter Rest. Die Carbonatgruppierung kann auch Teil eines kettenständigen Rings sein.

Auch gemischte Polyester der Kohlensäure und anderer Säuren (Polyester-Polycarbonate) sind geeignet. Bevorzugte Polycarbonate sind Bisphenol A-Polycarbonat, Bisphenol F-Polycarbonat, Polycarbonate auf Basis von Bisphenol A und Bisphenol TMC sowie auf Basis von 1,6-Hexandiol. Erfindungsgemäß werden unter dem Begriff Polyester auch Polycarbonate oder Copolyestercarbonate verstanden.

Bevorzugte Polyester sind Polyester mit einem Molekulargewicht von 150 bis 15000 g/mol, besonders bevorzugt von 200 bis 7500 g/mol, ganz besonders bevorzugt von 250 bis 3000 g/mol.

Auch entsprechend Endgruppen modifizierte Polyamide mit der wiederkehrenden Struktureinheit

$$-C(=O)-NH-$$

können zur Herstellung der Vermittleradditive verwendet werden. Als typische Bausteine für Polyamide kommen in Frage: ε-Caprolactam, Aminocapronsäure, Oenatholactam, 7-Aminoheptansäure, 11-Aminoundecansäure, 9-Aminononansäure oder Mischungen davon. Wird das Polyamid durch Polykondensation eines Diamins und einer Dicarbonsäure hergestellt, so können als Diamine vorzugsweise Tetramethylendiamin, Hexamethylendiamin, Nonamethylendiamin, Decamethylendiamin, Undecanmethylendiamin, Dodecamethylendiamin, para-Aminoanilin oder meta-Xylendiamin und als Dicarbonsäure vorzugsweise Adipinsäure, Sebacinsäure, Dodecandionsäure, Glutarsäure, Terephthalsäure, 2-Methylterephthalsäure, Isophthalsäure, Dimersäure und Naphthalindicarbonsäure eingesetzt werden.

Zusätzlich zu den Dicarbonsäuren oder Diaminen können auch polyfunktionelle

Verbindungen, wie Trimellitsäure und Pyromellitsäure, die 3 oder mehr funktionelle Gruppen aufweisen, in einer Menge bis zu 5 mol% mit verwendet werden.

Bevorzugte Polyamide sind solche mit einem Molekulargewicht von 150 bis 15000 g/mol, besonders bevorzugt von 200 bis 7500 g/mol, ganz besonders bevorzugt von 250 bis 3000 g/mol.

Besonderes bevorzugte Polyamide leiten sich von Nylon 6, Nylon 7, Nylon 8, Nylon 10, Nylon 2, Nylon 66, Nylon 69, Nylon 610, Nylon 611, Nylon 612, Nylon 6T, Nylon 6/66, Nylon 6/12, Nylon 6/6T ab.

Auch Polyesteramide mit den vorstehend aufgeführten Struktureinheiten können eingesetzt werden.

Die aufgeführten Polymere können linear, verzweigt oder sternförmig aufgebaut sein. Der Zugang zu verzweigten oder sternförmigen Polymeren ist durch Einsatz geeigneter multifunktioneller Ausgangsverbindungen möglich.

Besonders bevorzugte oligomere oder polymere Verbindungen sind Polyethylenoxide, Polypropylenoxide, Polyether von Ethylenoxid/Propylenoxid sowie (Poly)ε-Caprolactonester und Ester von Adipinsäure und einem Diol.

Die genannten oligomeren oder polymeren Verbindungen mit modifizierten Endgruppen sind vorzugsweise polydispers, d. h. sie weisen keine einheitliche Kettenlänge auf und werden auch polydispers zur Reaktion mit den genannten Silanverbindungen eingesetzt.

Die genannten oligomeren oder polymeren Verbindungen weisen neben anderen funktionellen Endgruppen zumindest eine endständige Doppelbindung oder nur endständigen Doppelbindungen auf, die sich vorzugsweise von Acrylsäure oder Methacrylsäure, bevorzugt von Acrylsäure ableiten. Diese endständige(n), ethylenisch ungesättigte(n) Doppelbindung(en) kann (können) entweder durch jeweilige Umsetzung der genannten Oligomeren oder Polymeren mit Acrylsäure, Methacrylsäure oder deren Derivaten oder durch Einsatz einer geeigneten, sich von der (Meth)acrylsäure abgeleiteten Starterkomponente wie z. B. eines hydroxyfunktionellen (Meth)acrylsäureestern erhalten werden, die so bei der oligomeren bzw. polymeren Verbindung als Endgruppe eingebaut vorliegt.

Vorzugsweise weisen die oligomeren oder polymeren Verbindungen, die zur additiven Umsetzung mit den Aminosilanen oder Thiosilanen, die mindestens eine hydrolisierbare Silangruppe aufweisen, eingesetzt werden, mindestens zwei endständige, ethylenisch ungesättigtte Doppelbindungen vorzugsweise als einzige Endgruppen auf, wobei 5 bis 95 mol%, vorzugsweise 10 bis 90 mol%, besonders bevorzugt 20 bis 80 mol% dieser Doppelbindungen bei der Umsetzung mit den Aminosilanen bzw. Thiosilanen zur Reaktion gebracht werden.

Sofern die vorstehend aufgeführten oligomeren oder polymeren Verbindungen mit mindestens einer endständigen, ethylenisch ungesättigten Doppelbindung zur Reaktion mit Isocyanatsilanen oder Epoxysilanen, die mindestens eine hydrolysierbare Silangruppe aufweisen, gebracht werden sollen, weisen sie neben mindestens einer endständigen ethylenisch ungesättigten Doppelbindung vorzugsweise mindestens noch eine Hydroxyl- oder Amino- Endgruppe auf.

Vorzugsweise werden mehr als 50 mol%, vorzugsweise mehr als 75 mol%, besonders bevorzugt mehr als 95% der Hydroxyl- oder Amino- Endgruppen bzw. entsprechender Derivate mit den Isocyanat- und/oder Epoxysilanen umgesetzt.

Die entsprechenden Reaktionsbedingungen, die jeweils einzuhalten sind, sind dem Fachmann bekannt.

Die erfindungsgemäß härtbare Polymermischung, vorzugsweise Polymerbetonmischung, enthält vorzugsweise weniger als 5 Gew.%, besonders bevorzugt weniger als 1 Gew.%, ganz besonders bevorzugt weniger als 0,5 Gew. %, bezogen auf das Gesamtgewicht der Komponenten 1.) bis 4.) der Polymermischung, wenigstens eines der vorstehend beschriebenen Vermittleradditive 1.) a) und/oder 1.) b).

Als ein durch radikalische Polymerisation härtbares System, das als Bindemittelkomponente 2.) in der erfindungsgemäßen, härtbaren Polymermischung zum Einsatz kommt, wird ein System umfassend wenigstens ein ethylenisch ungesättigtes Polymeres und/oder ein (Meth)acrylharz zusammen mit mindestens einem ethylenisch ungesättigten Monomeren, mindestens einen Radikalstarter und ggf. wenigstens einen Vemetzer eingesetzt.

Als ethylenisch ungesättigtes Polymeres kommt vorzugsweise ein wenigstens ethylenisch ungesättigtes Polymeres, besonders bevorzugt ein ethylenisch ungesättigtes Polyesterharz zum Einsatz, der durch Umsetzung von einfach ungesättigten Dicarbonsäuren mit Diolen, ggf. auch unter Mitverwendung von gesättigten Carbonsäuren oder (Di)cyclopentadien, erhalten wurde, wie es beispielsweise in E. Brandau, "Duroplastwerkstoffe", VCH Verlagsgesellschaft, Weinheim 1993 und in J. H. Aurer, A. Kasper, "Unsaturated Polyester Resins", Verlag Moderne Industrie, Landsberg/Lech 2003 sowie in G. Kannebley et al., "AVK-TV Handbuch", Band I und II, Frankfurt 2004 beschrieben ist.

Besonders bevorzugte zur Herstellung ethylenisch ungesättigter Polyesterharze verwendete ethylenisch ungesättigte Dicarbonsäuren bzw. deren Derivate sind Maleinsäure und Fumarsäure sowie Maleinsäureanhydrid. Als bifunktionelle gesättigte Carbonsäuren können Adipinsäure, Tetrahydrophthalsäure, Phthalsäure, Isophthalsäure, Terephthalsäure, HET-Säure (Hexachlor-endomethylentetrahydrophthalsäure) und Glutarsäure sowie die Anhydride dieser Carbonsäuren oder Diels-Alder-Addukte aus Maleinsäureanhydrid und Cyclopentadien mitverwendet werden. Bei der Herstellung von ungesättigten Polyesterharzen können auch Acrylsäure und Methacrylsäure mitverwendet werden. Zur Polykondensation kommen als bifunktionelle Alkoholkomponente vorzugsweise Propylen-, Dipropylen-, Ethylen-, Diethylen- und/oder Neopentylglykol, sowie 1,4-Butandiol, 1,6-Hexandiol, alkoxyliertes Bisphenol A und 2,2,4-Trimethylpentan-1,3-diol in Frage.

Neben den bifunktionellen Carbonsäuren und Alkoholen können auch höherfunktionelle Carbonsäuren und Alkohole einsetzt werden, um verzweigte Polykondensationsprodukte zu erhalten.

Als weitere oder alternative Polymerkomponente für das durch radikalische Polymerisation härtbare System

können auch (Meth)acrylharze, wie z. B. Poly(meth)acrylate, Poly(meth)acrylamide, Copolymere aus (Meth)acrylaten/(Meth)acrylamide eingesetzt werden, wobei für diese Polymerbasis ggf. wenigstens ein bekannter Vernetzer, bevorzugt di-, tri- und höhertunktionelle (Meth)acrylate, z.B. Ethylenglycoldi(meth)acrylat, Propylenglycoldi(meth)acrylat, 1,4-Butandioldi(meth)acrylat, 1,6-Hexandioldi(meth)acrylat, Diethylenglycoldi(meth)acrylat, Dipropylenglycoldi(meth)acrylat, Glycerintri(meth)acrylat, Trimethylolpropantri(meth)acrylat, Triethylenglycoldi(meth)acrylat, Tripropylenglycoldi(meth)acrylat, vorzugsweise in Mengen bis zu 7,5 Gew.%, bevorzugt bis zu 5 Gew.%, bezogen auf das Gesamtgewicht der Bindemittelkomponente 2.) mitverwendet werden kann.

Darüber hinaus enthält die Bindemittelkomponente 2.) mindestens ein ethylenisch ungesättigtes Monomeres, vorzugsweise ggf. substituierte Styrole, (Meth)acrylate, (Meth)acrylamide oder deren Mischungen, vorzugsweise in einer Menge von bis zu 55 Gew.%, besonders bevorzugt bis zu 45 Gew.%, bezogen auf das Gesamtgewicht der Bindemittelkomponente 2.).

Darüber hinaus ist die erfindungsgemäße härtbare Polymermischung, vorzugsweise Polymerbetonmischung, durch einen Anteil von wenigstens 20 Gew.%, bevorzugt wenigstens 40 Gew.%, ganz besonders bevorzugt 60 Gew.%, insbesondere bis zu 95 Gew.%, bezogen auf das Gesamtgewicht der Komponenten 1.) bis 4.) der Polymermischung, mit verteilbaren anorganischen Füllstoffen als Zuschlagsstoffe ausgerüstet. Diese Füllstoff-Komponente 3.) zeichnet sich dadurch aus, dass sie in den Matrixmaterialien verteilbar, d. h. multipartikulär angeordnet werden kann und darin nicht löslich ist.

Eine Aufzählung der möglichen Füllstoffe wird in E. Brandau, "Duroplastwertwerkstoffe", VCH Verlagsgesellschaft, Weinheim 1993 sowie die in R. Bums, "Polyester Molding Compounds", Marcel Dekker Inc., New York 1982 und auch die in J. H. Aurer, A. Kasper, "Unsaturated Polyester Resins", Verlag Moderne Industrie, Landsberg/Lech 2003 gegeben.

Als verteilbare, anorganische Füllstoffe werden vorzugsweise anorganische, siliziumhaltige Verbindungen, wie beispielsweise Quartz, Cristobalit, pyrogene Kieselsäuren, gefällte Kieselsäuren, Wollastonit, Kaolin, Glimmer, Talk, vorzugsweise als Gesteinskömungen in allen Kornbereichen, d. h. von Feinstkornbereich bis zu einer groben Gesteinskömung, siliziumhaltige Verbindungen in Form geschnittener Fasern sowie sonstige sauerstoffhaltige anorganische Verbindungen von Magnesium, Calcium, Barium, wie Bariumsulfat, Calciumcarbonat, beispielsweise u. a. auch als Marmorkömung, Gips, Magnesiumhydroxid, und/oder anorganische Aluminiumverbindungen, vorzugsweise Aluminiumhydroxid, Aluminiumoxide (z. B. Korund) und Aluminiumoxidhydroxide eingesetzt. Besonders bevorzugt werden siliziumhaltige Verbindungen verwendet. Eine besonders bevorzugte Form der Füllstoffe sind körnige oder pulverförmige Füllstoffe. Die Korngrößenbereiche sind vorzugsweise von 1 µm bis 5 cm, besonders bevorzugt von 10 µm bis 2 cm, ganz besonders bevorzugt von 100 µm bis 2 cm gemessen als Durchmesser.

Für die Polymerisation der Bindemittelkomponente 2.) wird vorzugsweise mindestens ein Radikalstarter eingesetzt. Als Radikalstarter eignen sich organische Peroxide und Azoverbindungen, bevorzugt organische Peroxide. Die Auswahl von Radikalstartern erfolgt vorzugsweise entsprechend der Härtungstemperatur. Vorzugsweise werden als Radikalstarter Methylethylketonperoxid, Dibenzoylperoxid, Laurylperoxid, Dicumylperoxid, Cumenhydroperoxid, t-Butylperbenzoat, 1,1-Di-(t-butylperoxy)-3,3,5-Trimethylcyclohexan eingesetzt. Weitere geeignete Radikalstarter sind dem Fachmann prinzipiell bekannt. Darüber hinaus können sie aus einschlägigem Stande der Technik, z.B. Broschüren wie "Organische Peroxide für die UP-Harz-Verarbeitung: Produktübersicht" (von Akzo Nobel), "Luperox Organic Peroxides - Curing of unsaturated polyester resins" (von elf-atochem) und "Härter, Beschleuniger und andere Hilfsstoffe für die Verarbeitung von UP-Harzen" (von Pergan GmbH) entnommen werden.

Je nach Härtungsbedingungen kann ggf. ein üblicher Beschleuniger mit eingesetzt werden, damit eine radikalische Polymerisation und Aushärtung der

Bindemittelkomponente 2.) bereits bei niedrigeren Temperaturen, d.h. ohne externe Zuführung von Wärme, möglich ist. Übliche, bekannte Beschleuniger sind aminogruppenhaltige Verbindungen, bevorzugt tertiäre Amine wie Triethylamin, Tridimethylaminophenylphenol, Benzyldimethylamin, Dimethylanilin, Diethylanilin, Dimethyl-p-toluidine, Cobalt-Verbindungen wie Cobaltethylhexanoat, Vanadiumoctoat und/oder andere Metallcarboxylate. Geeignete Beschleuniger können auch den Broschüren "Härter, Beschleuniger und andere Hilfsstoffe für die Verarbeitung von UP-Harzen" (Pergan GmbH) entnommen werden. Als Beschleunigersystem kann auch eine Kombination von Amin- und Metall-Verbindung eingesetzt werden.

Die jeweils zum Einsatz kommenden Mengen eines Radikalstarters und eines ggf. vorhandenen Beschleunigersystems sind dem Fachmann bekannt.

Darüber hinaus kann die erfindungsgemäß härtbare Polymermischung, wenn notwendig, bekannte Verarbeitungsadditive, wie z. B. Trennmittel und Antischaummittel; Inhibitoren, Stabilisatoren, wie Antioxidantien, Lichtschutzmittel, Wärmestabilisatoren und Flammschutzmittel; Modifikatoren, wie z.B. Benetzungsmittel, Weichmacher, Verdicker, Thixotropiermittel; Schlagzähmacher und Blähmittel und/oder Oberflächenmodifikatoren, wie z.B. Antistatika; Pigmente, Netz- und Dispergiermittel enthalten. Die Auswahl der entsprechenden Additive erfolgt in bekannter Weise nach dem endgültigen Einsatzzweck.

Die erfindungsgemäßen Polymermischungen, vorzugsweise härtbaren Polymerbetonmischungen, werden in

bekannte Weise hergestellt, indem man die vorstehend genannten Komponenten der Polymermischung in üblichen Mischeinheiten zusammenbringt, wobei vorzugsweise das Vermittleradditiv 1.) unmittelbar vor Verarbeitung und Aushärtung der Polymermischung zugesetzt wird.

Durch den Einsatz der erfindungsgemäß zum Einsatz kommenden Vermittleradditivkomponente 1.), wie sie vorstehend erläutert ist, und das vorstehend aufgeführte Bindemittelsystem 2.) gelingt es, härtbare Polymermischungen, vorzugsweise härtbare Polymerbetonmischungen, zur Verfügung zu stellen, die nicht nur eine bessere Handhabung aufgrund ihres besseren Ausbreitmaßes aufweisen, sondern auch Kunststoffprodukte, vorzugsweise Polymerbetone, ergeben, die ausgezeichnete mechanische Eigenschaften aufweisen.

Ein weiterer Gegenstand der vorliegenden Erfindung ist daher auch die Verwendung der vorstehend beschriebenen Additionsprodukte 1.) a) bzw. 1.) b) mit mindestens einer hydrolysierbaren Silangruppe und mindestens einer endständigen, ethylenisch ungesättigten Doppelbindung als Vermittleradditiv in polymerisierbaren Mischungen, vorzugsweise polymerisierbaren Betonmischungen, basierend auf einem durch radikalische Polymerisation härtbaren System, entsprechend der vorstehend beschriebenen Bindemittelkomponente 2.), die mindestens 20 Gew.%, bevorzugt mindestens 40 Gew.%, ganz besonders bevorzugt mindestens 60 Gew.% bezogen auf das Gesamtgewicht der Komponenten 1.) bis 4.) der erfindungsgemäßen Polymermischung, mit verteilbaren, anorganischen Füllstoffen als Zusatzstoffe 3.) ausgestattet ist und ggf. übliche Hilfsstoffe 4.) enthält, vorzugsweise zur Herstellung von härtbaren Polymermischungen, vorzugsweise härtbaren Polymerbetonmischungen.

Alle Gew% Angaben in der vorliegenden Offenbarung sind so zu verstehen, dass die Gesamtmenge der Komponenten 1.) bis 4.) immer 100 Gew% ergeben muss.

Diese so erhaltenen Polymermischungen können in an sich bekannter Weise durch Polymerisation der ethylenisch ungesättigten Verbindungen und ggf. durch Einsatz eines Vemetzers ausgehärtet werden, wie in J. H. Aurer, A. Kasper, "Unsaturated Polyester Resins", Verlag Moderne Industrie, Landsberg/Lech 2003 sowie in G. Kannebley et al., "AVK-TV Handbuch", Band I und II, Frankfurt 2004 beschrieben ist. Die entsprechende Beschreibung wird hiermit als Teil der Offenbarung der vorliegenden Anmeldung eingeführt.

Der Aushärtungsprozess wird vom verwendeten Polymer-System, der Aushärtezeit, der Temperatur und der Masse des auszuhärtenden Systems bestimmt. Die Aushärtung kann ohne Zufuhr von thermischer Energie bei Raumtemperatur als Starttemperatur geschehen; bei dieser Reaktionsführung werden die zuvor genannten Beschleuniger eingesetzt. Die exotherme Reaktion führt zu einem Temperaturanstieg. Dabei kann der Verlauf der Härtung durch Bestimmung des Restmonomergehalts im sich bildenden polymeren Endprodukt wie im Polymerbeton ermittelt werden. Für bestimmte Anwendungen z. B. bei einem Lebensmittelkontakt ist es angebracht, einen möglichen Restmonomergehalt auf ein Mindestmaß zu reduzieren. Dazu wird vorzugsweise eine Nachhärtung durchgeführt, bei der die ausgehärtete Polymermischung noch mehrere Stunden bei erhöhter Temperatur gehalten wird, damit die noch ggfs. vorhandenen Monomeren noch auspolymerisieren können. Typische Nachhärtungs-Bedigungen sind Temperaturen von 60-100°C über Zeitdauern von 6 bis 24 Stunden.

Alternativ kann die Härtung der erfindungsgemäßen Polymermischung auch unter externer Energiezufuhr bei Starttemperaturen über 25°C durchgeführt werden, wie z. B. bei Temperaturen von 100 bis 160°C. Ein externer Energieeintrag kann auf verschiedenen Wegen erfolgen, unter anderem auch durch das Aufbringen von Druck.

Ein weiterer Gegenstand der vorliegenden Erfindung sind ausgehärtete Polymermischungen, vorzugsweise ausgehärteter Polymerbeton, aus erfindungsgemäßen, härtbaren Polymermischungen, vorzugsweise aus erfindungsgemäßen härtbaren Polymerbetonmischungen.

Aus dem erfindungsgemäßen Polymerbetonmischungen können Formartikel wie Rohre, Rinnen, Schächte, Verbindungsstücke, Segmentbauteile, Platten, Fliesen, Böden, Bodenbeläge, Auskleidungen, Wände, Decken, Kunstmarmor, Rahmen, unterschiedlichste Behältnisse (z. B. für Zu- und Abwasser), Dekorationsartikel, Spülen, Becken, Wannen, Tröge durch Aushärtung und ggfs. Formgebung hergestellt werden. Die erfindungsgemäßen Polymerbetonmischungen können sowohl in Gebäuden als auch im Freien sowie im Erdreich zur Herstellung von Polymerbetonformkörpern unterschiedlichster Art eingesetzt werden. Entsprechende Formkörper finden zum Beispiel in Wohnräumen, im Bürobereich, im Ladenbau, im Sanitärbereich, in Küchen, in Friseursalons, in Arztpraxen, in Krankenhäuser, in Flughäfen, in Laboratorien, in der Gastronomie oder in der Landwirtschaft Anwendung.

**Beispiele:**

In den Beispielen werden folgende Reaktionskomponenten eingesetzt:

| Name | Struktur |
|---|---|
| Diacrylat A | Polyethylenglycol 200-Diacrylat |
| Diacrylat B | Polyethylenglycol 400-Diacrylat |

(fortgesetzt)

| Name | Struktur |
|---|---|
| Diacrylat C | Diacrylat des ethoxilierten Bisphenol A mit 10 Ethylenoxid-Einheiten |
| Diacrylat D | Polyethylenglycol-Diacrylat mit 9 Ethylenoxid-Einheiten |
| Diacrylat E | Polypropylenglycol-Diacrylat 9 Propylenoxid-Einheiten |
| Monoacrylat F | OH-terminales Polyester-Monoacrylat (Polyester auf Basis von 2 ε-Caprolacton- Einheiten) |

**I Herstellung der Vermittleradditive**

Die Herstellung der Vermittleradditive kann ggf. in einem organischen Lösungsmittel erfolgen. In den folgenden Angaben steht die Abkürzung GPC für Gelpermeationschromatographie, NMR steht für kemmagnetische Resonanzspektroskopie, $M_n$ steht für das zahlengemittleres Molekulargewicht, PDI steht für die Polydispersität (d.h. den Quotienten $M_w/M_n$ aus gewichtsgemittleren und zahlengemittleren Molekulargewicht).

Vermittleradditiv 1:

60,00 g (76,9 mmol, basierend auf Molekulargewicht gemäß NMR-Spektroskopie) Diacrylat C (GPC: $M_n$=1100, PDI=1,08) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 10,23 g (46,2 mmol) 3-Aminopropyltriethoxysilan zugetropft, wobei die Temperatur 26°C nicht übersteigt. Man rührt 6 h. Produkt: $M_n$=1300, PDI=1,28, 2,2 mol Acrylat-Gruppen pro Mol Silangruppen (bestimmt über $^1$H-NMR-Spektroskopie).

Vermittleradditiv 2:

60,00 g (76,9 mmol, basierend auf Molekulargewicht gemäß NMR-Spektroskopie) Diacrylat C (GPC: $M_n$=1100, PDI=1,08) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 8 min werden 5,12 g (23,1 mmol)) 3-Aminopropyltriethoxysilan zugetropft, wobei die Temperatur 24°C nicht übersteigt. Man rührt 6 h. Produkt: $M_n$=1100, PDI=1,19, 5,4 mol Acrylat-Gruppen pro Mol Silangruppen (bestimmt über $^1$H-NMR-Spektroskopie).

Vermittleradditiv 3:

20,00 g (25,6 mmol, basierend auf Molekulargewicht gemäß NMR-Spektroskopie) Diacrylat C (GPC: $M_n$=1100, PDI=1,08) werden in einem verschließbaren Schraubdeckelglas mit Magnetrührkem vorgelegt. 3,41 g (15,4 mmol) 3-Aminopropyltriethoxysilan werden auf einmal zugegeben. Man rührt 6 h im verschlossenen Gefäß. Produkt: $M_n$=1300, PDI=1,28, 2,2 mol Acrylat-Gruppen pro Mol Silangruppen (bestimmt über $^1$H-NMR-Spektroskopie).

Vermittleradditiv 4:

10,00 g (19,1 mmol, basierend auf Molekulargewicht gemäß NMR-Spektroskopie) Diacrylat D (GPC: $M_n$=670, PDI=1,09) werden in einem verschließbaren Schraubdeckelglas mit Magnetrührkem vorgelegt. 2,54 g (11,5 mmol) 3-Aminopropyltriethoxysilan werden auf einmal zugegeben. Man rührt 6 h im verschlossenen Gefäß. Produkt: $M_n$=1900, PDI=3,51, 1,6 mol Acrylat-Gruppen pro Mol Silangruppen (bestimmt über $^1$H-NMR-Spektroskopie).

Vermittleradditiv 5:

60,00 g (185,2 mmol, basierend auf Molekulargewicht gemäß NMR-Spektroskopie) Diacrylat A (GPC: $M_n$=400, PDI=1,12) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 24,60 g (111,1 mmol) 3-Aminopropyltriethoxysilan zugetropft, wobei die Temperatur 28°C nicht übersteigt. Man rührt 8 h. Produkt: $M_n$=930, PDI=1,90, 2,1 mol Acrylat-Gruppen pro Mol Silangruppen (bestimmt über $^1$H-NMR-Spektroskopie).

Vermittleradditiv 6:

60,00 g (114,8 mmol, basierend auf Molekulargewicht gemäß NMR-Spektroskopie) Diacrylat B (GPC: $M_n$=710, PDI=1,10) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 15,23 g (68,8 mmol) 3-Aminopropyltriethoxysilan zugetropft, wobei die Temperatur 26°C nicht übersteigt. Man rührt 7 h. Produkt: $M_n$=1300, PDI=1,81, 2,1 mol Acrylat-Gruppen pro Mol Silangruppen (bestimmt über $^1$H-NMR-Spektroskopie).

Vermittleradditiv 7:

20,00 g (123,5 mmol, basierend auf Molekulargewicht gemäß NMR-Spektroskopie) Diacrylat A (GPC: $M_n$=400, PDI=1,12) werden in einem verschließbaren Schraubdeckelglas mit Magnetrührkem vorgelegt. 4,10 g (18,5 mmol) 3-Aminopropyltriethoxysilan werden auf einmal zugegeben. Man rührt 6 h im verschlossenen Gefäß. Produkt: $M_n$=640, PDI=1,85, 5,6 mol Acrylat-Gruppen pro Mol Silangruppen (bestimmt über $^1$H-NMR-Spektroskopie).

Vermittleradditiv 8:

20,00 g (38,3 mmol, basierend auf Molekulargewicht gemäß NMR-Spektroskopie) Diacrylat B (GPC: $M_n$=710, PDI=1,10) werden in einem verschließbaren Schraubdeckelglas mit Magnetrührkem vorgelegt. 2,54 g (11,5 mmol) 3-Aminopropyltriethoxysilan werden auf einmal zugegeben. Man rührt 6 h im verschlossenen Gefäß. Produkt: $M_n$=980, PDI=1,75, 5,6 mol Acrylat-Gruppen pro Mol Silangruppen (bestimmt über $^1$H-NMR-Spektroskopie).

Vermittleradditiv 9:

20,00 g (30,9 mmol, basierend auf Molekulargewicht gemäß NMR-Spektroskopie) Diacrylat E (GPC: $M_n$=700, PDI=1,09) werden in einem verschließbaren Schraubdeckelglas mit Magnetrührkem vorgelegt. 4,10 g (18,5 mmol) 3-Aminopropyltriethoxysilan werden auf einmal zugegeben. Man rührt 6 h im verschlossenen Gefäß. Produkt: $M_n$=1100, PDI=1,60, 4,1 mol Acrylat-Gruppen pro Mol Silangruppen (bestimmt über $^1$H-NMR-Spektroskopie).

Vermittleradditiv 10:

20,00 g (61,7 mmol, basierend auf Molekulargewicht gemäß NMR-Spektroskopie) Diacrylat E (GPC: $M_n$=700, PDI=1,09) werden in einem verschließbaren Schraubdeckelglas mit Magnetrührkem vorgelegt. 2,05 g (9,3 mmol) 3-Aminopropyltriethoxysilan werden auf einmal zugegeben. Man rührt 6 h im verschlossenen Gefäß. Produkt: $M_n$=890, PDI=1,51, 10,9 mol Acrylat-Gruppen pro Mol Silangruppen (bestimmt über $^1$H-NMR-Spektroskopie).

Vermittleradditiv 11:

60,00 g (114,7 mmol, basierend auf Molekulargewicht gemäß NMR-Spektroskopie) Diacrylat D (GPC: $M_n$=670, PDI=1,09) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 12,34 g 3-Aminopropyltrimethoxysilan (68,8 mmol) zugetropft, wobei die Temperatur 27°C nicht übersteigt. Man rührt 6 h. Produkt: $M_n$=1200, PDI=2,55, 1,8 mol Acrylat-Gruppen pro Mol Silangruppen (bestimmt über $^1$H-NMR-Spektroskopie).

Vermittleradditiv 12:

60,00 g (114,7 mmol, basierend auf Molekulargewicht gemäß NMR-Spektroskopie) Diacrylat D ($M_n$=670, PDI=1,09) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Auf einmal werden 6,17 g 3-Aminopropyltrimethoxysilan (34,4 mmol) zugegeben, wobei die Temperatur 25°C nicht übersteigt. Man rührt 8 h. Produkt: $M_n$=1100, PDI=2,32, 5,2 mol Acrylat-Gruppen pro Mol Silangruppen (bestimmt über $^1$H-NMR-Spektroskopie).

Vermittleradditiv 13:

60,00 g (114,7 mmol, basierend auf Molekulargewicht gemäß NMR-Spektroskopie) Diacrylat D ($M_n$=670, PDI=1,09) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 12 min werden 13,30 g (68,8 mmol) 3-(N-Methylamino)propyltrimethoxysilan zugetropft, wobei die Temperatur 25°C nicht übersteigt. Man rührt 6 h.

Produkt: $M_n$=900, PDI=1,59, 2,4 mol Acrylat-Gruppen pro Mol Silangruppen (bestimmt über $^1$H-NMR-Spektroskopie).

Vermittleradditiv 14:

20,00 g (61,7 mmol, basierend auf Molekulargewicht gemäß NMR-Spektroskopie) Diacrylat A ($M_n$=400, PDI=1,12) und 112,80 g Dowanol PMA (1-Methoxy-2-propylacetat) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Innerhalb von 10 min werden 8,20 g (37,0 mmol) 3-Aminopropyltriethoxysilan zugegeben, wobei die Temperatur 27°C nicht übersteigt. Man rührt 20 h. Produkt: $M_n$=430, PDI=1,14, 2,2 mol Acrylat-Gruppen pro Mol Silangruppen (bestimmt über $^1$H-NMR-Spektroskopie).

Vermittleradditiv 15:

50,00 g (192,5 mmol, basierend auf Herstellerangabe) Monoacrylat F und 0,78 g Dibutylzinndilaurat-Lösung (1% in Xylol, 0,01 mmol DBTL) werden in einem Rundkolben mit Rückflusskühler, Gaseinlass, Temperaturfühler, Tropftrichter und KPG-Rührer vorgelegt. Die Reaktion wird unter Stickstoff-Strom durchgeführt. Das Reaktionsgemisch wird auf 80°C erwärmt. Innerhalb von 5 min werden 27,90 g (135,9 mmol) 3-Isocyanatopropyltrimethoxysilan zugetropft, wobei die Temperatur auf 98°C ansteigt. Durch Kühlen wird die Temperatur wieder auf 80°C gesenkt. Man rührt noch 2,5 h bei 80°C weiter. Produkt: Die Isocyanat-Gruppen wurden vollständig umgesetzt, Hydroxy-Endgruppen sind nicht mehr nachweisbar (bestimmt über $^{13}$C-NMR-Spektroskopie); das Verhältnis von Acrylat-Doppelbindungen zu Silan-Gruppen beträgt 1,05 zu 1 (bestimmt über $1^H$-NMR-Spektroskopie; Theorie: 1:1).

**II Anwendung der Vermittleradditive**

Die nachfolgende Angabe von "Teilen" bezieht sich stets auf Gewichtsteile.

Herstellung von Probenkörper basierend auf einem UP-Harz-System

Zunächst wird das ungesättigte Polyesterharz (UP-Harz) mit den in den Tabelle 1 angegebenen Komponenten vorgemischt:

**Tabelle 1:**

Mischung A (durch radikalische Polymerisation härtbares System):

| | | |
|---|---|---|
| UP-Harz | Palatal P-04-01 | 100 Teile |
| Styrol | | 12 Teile |
| Co-Beschleuniger | Accelerator NL-49P | 1,12 Teile |

Palatal P-04-01 ist ein ungesättigtes Standard-Orthophthalsäureharz, das Maleinsäure-Einheiten enthält, 65% in Styrol (Hersteller: DSM Composite Resins). Der Co-Beschleuniger Accelerator NL-49P besteht aus Cobalt(II)ethylhexanoat, 1 % Co in aliphatischem Ester (Hersteller: Akzo Nobel Polymer Chemicals).

Die Bestandteile werden separat eingewogen und vermischt. Die so gewonnene Mischung A wird mit den in der Tabelle 2 angegebenen Komponenten in den dort angegebenen Mengen weiter verarbeitet:

**Tabelle 2:**

| | | |
|---|---|---|
| Mischung A | siehe Tabelle 1 | 250 Teile |
| Peroxid (Radikalstarter) | Butanox M 50 | 2 Teile |
| Quarzmehl (Füllstoff) | Millisil W 3 | 250 Teile |
| Quarzsand (Füllsotff) | F32 | 500 Teile |

Butanox M 50 ist Methylethylketonperoxid, 33%, in 63% Dimethylphthalat und 4% MEK/Wasser (Hersteller: Akzo Nobel Polymer Chemicals).

Quarzmehl Millisil W 3 und Quarzsand F32 stammen von der Firma Quarzwerke.

**(A) Messung der Biegefestigkeit**

(Mengenanteile gemäß Tabellen 1 und 2)

Beispiel 1:

Mischung A wird vorgelegt und mit Peroxid sowie dem Vermittleradditiv 1 (0,1 Gew% bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Die gemessene Biegefestigkeit beträgt 53,2 $N/mm^2$.

Vergleichsbeispiel 1 (kein Vermittleradditiv):

Mischung A wird vorgelegt und mit Peroxid vermischt. Anschließend wird der Füllstoff zugegeben und ebenfalls vermischt. Diese Füllstoff/Harz-Mischung wird in eine flache Form gegossen. Die Aushärtung zu einer Platte erfolgt bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Die gemessene Biegefestigkeit beträgt 39,9 $N/mm^2$.

Beispiel 2:

Mischung A wird vorgelegt und mit Peroxid sowie mit dem Vermittleradditiv 6 (0,1 Gew.% bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Die gemessene Biegefestigkeit beträgt 52,5 $N/mm^2$.

Vergleichsbeispiel 2 (niedermolekulares Vermittleradditiv):

Mischung A wird vorgelegt und mit Peroxid sowie mit 3-Methacryloxypropyltrimethoxysilan (0,1 Gew% bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten wird die Platte in Probenkörper geschnitten, welche der Prüfnorm DIN EN ISO 178 entsprechen. Die gemessene Biegefestigkeit beträgt 43,1 $N/mm^2$.

Beispiel 3:

Mischung A wird vorgelegt und mit Peroxid sowie mit dem Vermittleradditiv 9 (0,1 Gew.% bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Die gemessene Biegefestigkeit beträgt 49,6 $N/mm^2$.

**(B) Messung des E-Moduls**

(Mengenanteile gemäß Tabellen 1 und 2)

Beispiel 4:

Mischung A wird vorgelegt und mit Peroxid sowie mit dem Vermittleradditiv 14 (0,1 Gew.% der 20%-igen Lösung, bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Der gemessene Elastizitätsmodul beträgt 8,3 $kN/mm^2$.

Vergleichsbeispiel 3: (kein Vermittleradditiv)

Mischung A wird vorgelegt und mit Peroxid vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm DIN EN ISO 178 entsprechen. Der gemessene Elastizitätsmodul beträgt 5,8 $kN/mm^2$.

Vergleichsbeispiel 4 (niedermolekulares Vermittleradditiv):

Mischung A wird vorgelegt und mit Peroxid sowie mit 3-Methacryloxypropyltrimethosysilan (0,1 Gew%, bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten wird die Platte in Probenkörper geschnitten, welche der Prüfnorm DIN EN ISO 178 entsprechen. Der gemessene Elastizitätsmodul beträgt 6,2 $kN/mm^2$.

**(C) Messung der Schlagbiegefestigkeit**

(Mengenanteile gemäß Tabellen 1 und 2)

Beispiel 5:

Mischung A wird vorgelegt und mit Peroxid sowie mit dem Vermittleradditiv 14 (0,1 Gew.% der 20%-igen Lösung, bezogen auf die Menge des Füllstoffs) vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm EN ISO 179 entsprechen. Die gemessene Schlagbiegefestigkeit beträgt 1,957 $mJ/mm^2$.

Vergleichsbeispiel 5: (kein Vermittleradditiv)

Mischung A wird vorgelegt und mit Peroxid vermischt. Anschließend wird der Füllstoff zugegeben und ebenfalls vermischt. Diese Füllstoff/Harz-Mischung wird in eine flache Form gegossen. Die Aushärtung zu einer Platte geschieht bei Raumtemperatur für 1 Stunde. Anschließend wird die Platte noch 24 Stunden bei 60°C gelagert. Nach dem vollständigen Aushärten werden aus der Platte Probenkörper geschnitten, welche der Prüfnorm EN ISO 179 entsprechen. Die gemessene Schlagbiegefestigkeit beträgt 1,574 $mJ/mm^2$.

**(D) Messung der Viskosität**

Beispiel 6:

Abweichend von Tabelle 2 werden 100 Teile der Mischung A vorgelegt und mit dem Vermittleradditiv 14 (0,5 Teile der 20%-igen Lösung) vermischt. Anschließend werden 180 Teile Quarzmehl Millisil W8 (Firma Quarzwerke) zugefügt und ebenfalls vermischt. Die Viskosität der Mischung wird mit Hilfe eines Brookfield RV Viskosimeters (Firma Brookfield GmbH, Lorch) bei 23°C (Spindel 6; 5 U/min) mit 41,2 Pa*s bestimmt.

Vergleichsbeispiel 6: (kein Vermittleradditiv)

100 Teile der Mischung A (siehe Tabelle 1) werden vorgelegt. Anschließend werden 180 Teile Quarzmehl Millisil W8 (Firma Quarzwerke) zugefügt und damit vermischt. Die Viskosität der Mischung wird mit Hilfe eines Brookfield RV Viskosimeters (Firma Brookfield GmbH, Lorch) bei 23°C (Spindel 6; 5 U/min) mit 48,2 Pa*s bestimmt.

Vergleichsbeispiel 7: (niedermolekularer Vermittleradditiv)

100 Teile der Mischung A werden vorgelegt und mit 0,5 Teilen 3-Methacryloxypropyltrimethoxysilan vermischt. Anschließend werden 180 Teile Quarzmehl Millisil W8 (Fiama Quarzwerde) zugefügt und ebenfalls vermischt. Die Viskosität der Mischung wird mit Hilfe eines Brookfield RV Viskosimeters (Firma Brookfield GmbH, Lorch) bei 23°C (Spindel 6; 5 U/min) zu 48,6 Pa*s bestimmt.

Beispiel 7:

Abweichend von Tabelle 2 werden 100 Teile der Mischung A vorgelegt und mit dem Vermittleradditiv 14 (1,0 Teile der 20%-igen Lösung) vermischt. Anschließend werden 180 Teile Quarzmehl Millisil W8 (Firma Quarzwerke) zugefügt und ebenfalls vermischt. Die Viskosität der Mischung wird mit Hilfe eines Brookfield RV Viskosimeters (Firma Brookfield GmbH, Lorch) bei 23°C (Spindel 6; 5 U/min) mit 30,8 Pa*s bestimmt.

Vergleichsbeispiel 8: (niedermolekulares Vermittleradditiv)

100 Teile der Mischung A werden vorgelegt und mit 1,0 Teilen 3-Methacryloxypropyltrimethoxysilan vermischt. Anschließend werden 180 Teile Quarzmehl Millisil W8 (Fiama Quarzwerde) zugefügt und ebenfalls vermischt. Die Viskosität der Mischung wird mit Hilfe eines Brookfield RV Viskosimeters (Firma Brookfield GmbH, Lorch) bei 23°C (Spindel 6; 5 U/min) zu 46,8 Pa*s bestimmt.

**(E) Bestimmung des Ausbreitmaßes**

Der Ausbreitversuch wurde in Anlehnung an DIN 1048, Teil 1 durchgeführt. Für die Durchführung des Ausbreitversuchs sind ein 70 cm x 70 cm großer Ausbreittisch, der waagerecht und unnachgiebig zu lagern ist, eine Form und ein Holzstab erforderlich. Die verwendete Form ist zylinderförmig ohne Boden und Deckel, hat einen Durchmesser von 10 cm und eine Höhe von 5,5 cm.

Tischplatte und Innenfläche der Form sind feucht abzuwischen. In die mittig auf die Tischplatte gestellte Form wird der Beton mit der Kelle in zwei etwa gleich dicke Schichten eingefüllt und jede Schicht mit dem Holzstab ohne Verdichtungswirkung horizontal geebnet bzw. bündig abgezogen. Dabei steht der Prüfer auf den beiden Trittblechen der Form. Danach wird die freie Fläche der Tischplatte gereinigt und die Form senkrecht hochgezogen. Hierauf wird die Tischplatte innerhalb von 15 s am Handgriff 15 mal bis zum Anschlag, jedoch ohne kräftig daran anzustoßen, angehoben und frei fallengelassen. Der gesamte Versuch soll innerhalb von 90 s ausgeführt werden. Parallel zu den Tischkanten werden die zueinander senkrecht stehenden Durchmesser $a_1$ und $a_2$ der ausgebreiteten Masse gemessen und der Mittelwert gebildet.

Beispiel 8:

Abweichend von Tabelle 2 wird eine Mischung bestehend aus 12 Teilen der Mischung A, 0,12 Teilen der Lösung des Vermittleradditivs 14, 10 Teilen Quarzmehl Millisil W3 (Firma Quarzwerke), 28 Teilen Kies der Gesteinskömung 0-3 mm, 50 Teilen Kies der Gesteinskömung 1-10 mm sowie 0,24 Teilen des Radikalstarters Butanox M 50 (Firma Akzo Nobel Polymer Chemicals) gemäß der vorstehenden Beschreibung einem Ausbreitversuch unterzogen. Das bestimmte Ausbreitmaß beträgt 19,9 cm.

Vergleichsbeispiel 9: (kein Vermittleradditiv)

Eine Mischung bestehend aus 12 Teilen der Mischung A, 10 Teilen Quarzmehl Millisil W3 (Firma Quarzwerke), 28 Teilen Kies der Gesteinskömung 0-3 mm, 50 Teilen Kies der Gesteinskömung 1-10 mm sowie 0,24 Teilen des Radikalstarters Butanox M 50 (Firma Akzo Nobel Polymer Chemicals) wird gemäß der vorstehenden Beschreibung einem Ausbreitversuch unterzogen. Das bestimmte Ausbreitmaß beträgt 16,4 cm.

Vergleichsbeispiel 10: (niedermolekulares Vermittleradditiv)

Eine Mischung bestehend aus 12 Teilen der Mischung A, 0,12 Teilen 3-Methacryloxypropyltrimethoxysilan, 10 Teilen Quarzmehl Millisil W3 (Firma Quarzwerke), 28 Teilen Kies oder Gesteinskömung 0-3 mm, 50 Teilen Kies oder Gesteinskömung 1-10 mm sowie 0,24 Teilen des Radikalstarters Butanox M 50 (Firma Akzo Nobel Polymer Chemicals) wird gemäß der vorstehenden Beschreibung einem Ausbreitversuch unterzogen. Das bestimmt Ausbreitmaß beträgt 16,7 cm.

Beispiel 9:

Abweichend von Tabelle 2 wird eine Mischung bestehend aus 12 Teilen der Mischung A, 0,24 Teilen der Lösung des Vermittleradditivs 14, 10 Teilen Quarzmehl Millisil W3 (Firma Quarzwerke), 28 Teilen Kies der Gesteinskömung 0-3 mm, 50 Teilen Kies der Gesteinskömung 1-10 mm sowie 0,24 Teilen des Radikalstarters Butanox M 50 (Firma Akzo Nobel Polymer Chemicals) gemäß der vorstehenden Beschreibung einem Ausbreitversuch unterzogen. Das bestimmte Ausbreitmaß beträgt 20,3 cm.

Vergleichsbeispiel 11: (niedermolekulares Vermittleradditiv)

Eine Mischung bestehend aus 12 Teilen der Mischung A, 0,24 Teilen 3-Methacryloxypropyltrimethoxysilan, 10 Teilen Quarzmehl Millisil W3 (Firma Quarzwerke), 28 Teilen Kies oder Gesteinskömung 0-3 mm, 50 Teilen Kies oder Gesteinskömung 1-10 mm sowie 0,24 Teilen des Radikalstarters Butanox M 50 (Firma Akzo Nobel Polymer Chemicals) wird gemäß der vorstehenden Beschreibung einem Ausbreitversuch unterzogen. Das bestimmt Ausbreitmaß beträgt 16,8 cm.

## Patentansprüche

**1.** Eine härtbare Polymermischung umfassend

1.) wenigstens ein mindestens oligomeres Additionsprodukt a) von wenigstens einem mindestens eine hydrolysierbare Silangruppe aufweisenden Aminosilan und/oder Thiosilan an mindestens eine Verbindung, die mindestens zwei endständige, ethylenisch ungesättigte Doppelbindungen als einzige Endgruppen aufweist, und/oder wenigstens ein mindestens oligomeres Additionsprodukt b) von wenigstens einem mindestens eine hydrolysierbare Silangruppe auf- weisendes Isocyanatsilan und/oder Epoxysilan an mindestens eine wenigstens drei Struktureinheiten aufweisende, oligomere Verbindung, die wenigstens eine endständige Hydroxygruppe oder endständige Aminogruppe und wenigstens eine endständige, ethylenisch ungesättigte Doppelbindung aufweist, als Vermittleradditiv,
2.) ein durch radikalische Polymerisation härtbares System umfassend wenigstens ein ethylenisch ungesättigtes Polymeres und/oder ein (Meth)acrylharz, mindestens ein ethylenisch ungesättigtes Monomeres, mindestens einen Radikalstarter und ggfs. wenigstens einen Vernetzer als Bindemittel,
3.) wenigstens 20 Gew% bevorzugt wenigstens 40 Gew%, bezogen auf das Gesamtgewicht der Komponenten 1.) bis 4.) der Polymermischung, anorganische, vorzugsweise multipartikulärer Füllstoffe als Zuschlagstoffe und
4.) ggfs. übliche Hilfsstoffe.

**2.** Eine härtbare Polymermischung nach Anspruch 1, **dadurch gekennzeichnet, dass** sie weniger als 5 Gew%, bevorzugt weniger als 1 Gew%, besonders bevorzugt weniger als 0,5 Gew%, bezogen auf das Gesamtgewicht der Komponenten 1.) bis 4.) der Polymermischung, der Vermittleradditiv-Komponente 1.) enthält.

**3.** Eine härtbare Polymermischung nach Anspruch 1 oder 2, **dadurch gekennzeichnet, dass** zur Herstellung des Additionsproduktes a) als Verbindung mit wenigstens zwei endständigen, ethylenisch ungesättigten Doppelbindungen, Verbindungen mit endständigen Acrylat-, Methacrylat- und/oder Allyl -Gruppen eingesetzt wurden, wobei wenigstens eine endständige Gruppe als eine endständige Acrylat- oder endständige Methacrylat- Gruppe, bevorzugt eine endständige Acrylatgruppe vorliegt,
und
zur Herstellung des Additionsproduktes b) als oligomere Verbindungen mit wenigstens einer endständigen, ethylenisch ungesättigten Doppelbindung eine oligomere Verbindung mit einer endständigen Acrylat-, Methyacrylat- oder Allyl-Gruppe, vorzugsweise wenigstens einer endständigen Acrylat -Gruppe und wenigstens einer endständigen Amino- oder Hydroxy -Gruppe eingesetzt wurde.

**4.** Eine härtbare Polymermischung nach einem der Ansprüche 1 bis 3, **dadurch gekennzeichnet, dass** als Verbindung mit wenigstens zwei endständigen, ethylenisch ungesättigte Doppelbindungen aufweisenden Gruppen eine wenigstens oligomere, vorzugsweise polymere Verbindung zur Herstellung des Additionsproduktes a) und als Verbindung mit wenigstens einer endständigen, ethylenisch ungesättige Doppelbindung aufweisenden Gruppe und wenigstens einer endständigen Hydroxyl- oder Amino- Gruppe eine polymere Verbindung zur Herstellung des Additionsproduktes b) eingesetzt wurde.

5. Eine härtbare Polymermischung nach einem der Ansprüche 1 bis 4, **dadurch gekennzeichnet, dass** als Verbindung mit wenigstens einer bzw. mit wenigstens zwei endständigen, ethylenisch ungesättigten Doppelbindungen ein entsprechender Polyether, gesättigter Polyester, Polyamid, gesättigtes Polyesteramid und/oder gesättigter Polyesterpolyether eingesetzt wurde.

6. Eine härtbare Polymermischung nach einem der Ansprüche 1 bis 5, **dadurch gekennzeichnet, dass** als eine wenigstens eine hydrolysierbare Silangruppe aufweisende Verbindung eine Verbindung der allgemeinen Formel

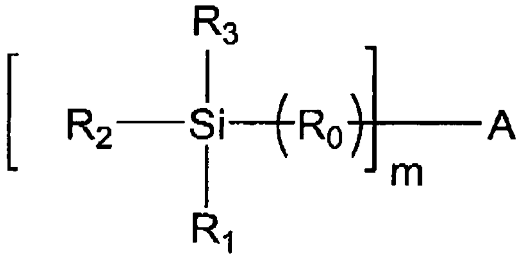

eingesetzt wurde, in der
A für eine Epoxidgruppe, eine Glycidyloxygruppe, eine Isocyanatgruppe, eine - SH Gruppe, oder eine -N(H)-X Gruppe steht, wobei X für Wasserstoff, einen Alkylrest mit 1 bis 6 C-Atomen, einen Arylrest mit 6 bis 10 C-Atomen oder eine Cycloalkylrest mit 4 bis 6 C-Atomen steht, wobei jeder dieser X-Reste mit einer primären oder sekundären Aminogruppe substituiert sein kann, oder eine Bindung bedeutet, wenn m eine ganze Zahl 2 ist,
$R_0$ für einen Alkylenrest mit 1 bis 12 C-Atomen, eine Cycloalkylenrest mit 4 bis 6 C-Atomen oder einen Arylenrest mit 6 bis 10 C-Atomen steht,
$R_1$ für einen Alkylrest mit 1 bis 3 C-Atomen, ein Halogen, eine -O-C(=O)-$R_4$ Gruppe oder eine -O$R_4$ Gruppe steht, wobei $R_4$ für Wasserstoff oder einen Alkylrest mit 1 bis 3 C-Atomen steht,
$R_2$ für einen Alkylrest mit 1 bis 3 C-Atomen, eine -O-C(=O)-$R_4$-Gruppe, ein Halogen oder eine -O$R_4$-Gruppe steht, wobei $R_4$ für Wasserstoff oder einen Alkylrest mit 1 bis 3 C-Atomen steht,
$R_3$ für eine -O-C(=O)-$R_4$-Gruppe, ein Halogen oder eine-O$R_4$-Gruppe steht, wobei $R_4$ für einen Alkylrest mit 1 bis 3 C-Atomen steht,
und
m für eine ganze Zahl 1 oder 2 steht.

7. Eine härtbare Polymermischung nach Anspruch 6, **dadurch gekennzeichnet, dass** als hydrolysierbare Silangruppe aufweisende Verbindung 3-Aminopropyltrimethoxysilan, 3-Aminopropylmethyldiethoxysilan, 3-Aminopropyldimethylethoxysilan, 3-Aminopropyltriethoxysilan, Bis(trimethoxysilylpropyl)amin, 3(Aminoethyl)aminopropyltrimethoxysilan, 3-(Methylamino)propyltrimethoxysilan, 3-Isocyanatopropyltrimethoxysilan, 3-Isocyanatopropyltriethoxysilan, 3-Mercaptopropyltrimethoxysilan, 3-Mercaptopropylmethyldimethoxysilan und/oder 3-Mercaptopropyltriethoxysilan eingesetzt wurde.

8. Eine härtbare Polymermischung nach einem der Ansprüche 1 bis 7, **dadurch gekennzeichnet, dass** die Bindemittel-Komponente 2.) in einer Menge < 80 Gew%, bevorzugt < 60 Gew%, besonders bevorzugt < 40 Gew%, bezogen auf das Gesamtgewicht der Komponenten 1.) bis 4.) der Polymermischung, vorliegt.

9. Eine härtbare Polymermischung nach einem der Ansprüche 1 bis 8, **dadurch gekennzeichnet, dass** die Bindemittel-Komponente 2.) auf wenigstens einem ethylenisch ungesättigten Polyester und mindestens einem ethylenisch ungesättigten Monomeren oder auf wenigstens einem (Meth)acrylharz ausgewählt aus der Gruppe umfassend Polyacrylate, Polymethacrylate, Polyacrylamide, Polymethacrylamide und Copolymeren von (Meth)acrylaten und (Meth)acrylamiden und wenigstens einem ethylenisch ungesättigten Monomeren und jeweils ggfs. wenigstens einem Vemetzer basiert.

10. Eine härtbare Polymermischung nach Anspruch 9, **dadurch gekennzeichnet, dass** bis zu 55 Gew%, bevorzugt bis zu 45 Gew%, bezogen auf das Gesamtgewicht der Bindemittel-Komponente 2.), wenigstens ein ethylenisch ungesättigtes Monomeres vorliegt.

**11.** Eine härtbare Polymermischung nach einem der Ansprüche 1 bis 10, **dadurch gekennzeichnet, dass** sie wenigstens 60 Gew%, bezogen auf das Gesamtgewicht der Komponenten 1.) bis 4.) der Polymermischung, Füllstoffe, vorzugsweise als anorganische Füllstoffe anorganische siliziumhaltige Verbindungen, vorzugsweise in Form von Gesteinskömungen oder geschnittenen Fasern, und/oder anorganische Sauerstoffverbindungen von Aluminium und/oder Magnesium, vorzugsweise Aluminiumoxide, Aluminiumhydroxide, Aluminiumoxidhydroxide und/oder Magnesiumhydroxide, enthält.

**12.** Eine härtbare Polymermischung nach einem der Ansprüche 1 bis 11, **dadurch gekennzeichnet, dass** die Polymermischung eine härtbare Polymerbetonmischung ist.

**13.** Verwendung von wenigstens einem Additionsprodukt 1.) a) und/oder 1.) b) nach einem der Ansprüche 1 bis 7 als Vermittleradditiv zur Herstellung einer härtbaren Polymermischung gemäß Anspruch 11, vorzugsweise einer härtbaren Polymerbetonmischung gemäß Anspruch 12, basierend auf einem durch radikalische Polymerisation härtbarem System gemäß einem der Ansprüche 8 bis 10 als Bindemittel, das mit mindestens 20 Gew.%, bevorzugt mindestens 40 Gew.%, besonders bevorzugt mindestens 60 Gew.%, bezogen auf das Gesamtgewicht der Komponenten 1.) bis 4.) der härtbaren Polymermischung, multipartikulärer, verteilbarer, anorganischer Füllstoffe als Zuschlagsstoffe und ggf. üblicher Hilfsstoffe ausgestattet ist.

**14.** Verfahren zur Herstellung einer härtbaren Polymermischung, vorzugsweise härtbaren Polymerbetonmischung, ggf. als Formkörper, **dadurch gekennzeichnet, dass** man wenigstens ein Vermittleradditiv nach einem der Ansprüche 1 bis 7 mit einem radikalisch polymerisierbaren System gemäß einer der Ansprüche 8 bis 10, mit multipartikulären, verteilbaren, anorganischen Füllstoffen als Zuschlagsstoffen und ggf. üblichen Hilfsstoffen vermischt und die Polymermischung ggfs. unter Formgebung durch Polymerisation aushärtet.

**15.** Ausgehärtete Polymermischung, vorzugsweise ausgehärteter Polymerbeton erhältlich nach Anspruch 14.

## Claims

**1.** A curable polymer mixture comprising

1.) at least one at least oligomeric addition product a) of at least one amino silane and/or thiosilane having at least one hydrolysable silane group to at least one compound having at least two terminal, ethylenically unsaturated double bonds as the only terminal groups, and/or at least one at least oligomeric addition product b) of at least one isocyanate silane and/or epoxy silane having at least one hydrolysable silane group to at least one oligomeric compound having at least three structural units, at least one terminal hydroxy group or terminal amino group and at least one terminal ethylenically unsaturated double bond, as coupling additive,
2.) a system which can be hardened by radical polymerisation, comprising at least one ethylenically unsaturated polymer and/or a (meth)acrylic resin, at least one ethylenically unsaturated monomer, at least one radical initiator and optionally at least one cross-linking agent as binder,
3.) at least 20 % by weight, preferably at least 40 % by weight, based on the total weight of components 1.) to 4.) of the polymer mixture, of inorganic, preferably multiparticulate, fillers as aggregates and
4.) optionally conventional auxiliaries.

**2.** A curable polymer mixture according to claim 1 , **characterised in that** it contains less than 5 % by weight, preferably less than 1 % by weight, more preferably less than 0.5 % by weight, based on the total weight of components 1.) to 4.) of the polymer mixture, of the coupling additive as component 1.).

**3.** A curable polymer mixture according to claim1 or 2, **characterized in that** the compounds used for the preparation of addition product a) and having at least two terminal ethylenically unsaturated double bonds are compounds with terminal (meth)acrylate groups and/or allyl groups, of which at least one terminal double bond is an acrylate group or methacrylate group, preferably an acrylate group,
and the oligomeric compounds used for the preparation of addition product b) and having at least one terminal double bond are compounds with at least one terminal acrylate, methacrylate or allyl group, preferably an acrylate group and at least one terminal amino or terminal hydroxyl group.

**4.** A curable polymer mixture according to any one of claims 1 to 3, **characterised in that** an at least oligomeric, preferably polymeric, compound was used for the preparation of addition product a) as the compound having at

least two terminal ethylenically unsaturated double bonds and a polymeric compound was used for the preparation of addition product b) as the compound having a group having at least one terminal ethylenically unsaturated double bond and at least one terminal hydroxyl or amino group.

5. A curable polymer mixture according to any one of claims 1 to 4, **characterised in that** a polyether, saturated polyester, polyamide, saturated polyester amide and/or saturated polyester polyether was used as a compound having at least one or at least two terminal etylenically unsaturated double bonds.

6. A curable polymer mixture according to any one of claims 1 to 5, **characterised in that** used as a compound having at least one hydrolysable silane group was a compound of the general formula:

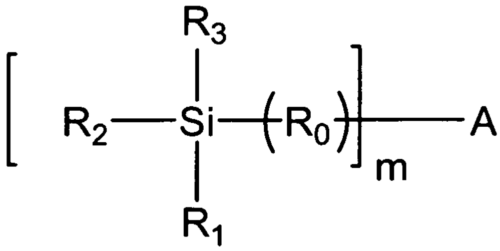

wherein

A represents an epoxide group, a glycidyloxy group, an isocyanate group, an -SH group, or an -N(H)-X group, wherein X represents hydrogen, an alkyl radical having 1 to 6 carbon atoms, an aryl radical having 6 to 10 carbon atoms or a cycloalkyl radical having 4 to 6 carbon atoms, wherein each of these X radicals can be substituted by a primary or secondary amino group, or represents a bond when m is the integer 2,
$R_0$ represents an alkylene radical having 1 to 12 carbon atoms, a cycloalkylene radical having 4 to 6 carbon atoms or an arylene radical having 6 to 10 carbon atoms,
$R_1$ represents an alkyl radical having 1 to 3 carbon atoms, a halogen, an -O-C(=O)-$R_4$ group or an -O$R_4$ group, wherein $R_4$ represents hydrogen or an alkyl radical having 1 to 3 carbon atoms,
$R_2$ represents an alkyl radical having 1 to 3 carbon atoms, an -O-C(=O)-$R_4$ group, a halogen or an -O$R_4$ group, wherein $R_4$ represents hydrogen or an alkyl radical having 1 to 3 carbon atoms,
$R_3$ represents an -O-C(=O)-$R_4$ group, a halogen or an -O$R_4$ group, wherein $R_4$ represents an alkyl radical having 1 to 3 carbon atoms,

and

m represents an integer 1 or 2.

7. A curable polymer mixture according to claim 6, **characterised in that** 3-aminopropyltrimethoxysilane, 3-aminopropylmethyldiethoxysilane, 3-aminopropyldimethylethoxysilane, 3-aminopropyltriethoxysilane, bis(trimethoxysilylpropyl)amine, 3-(aminoethyl)aminopropyltrimethoxysilane, 3-(methylamino)propyltrimethoxysilane, 3-isocyanatopropyltrimethoxysilane, 3-isocyanatopropyltriethoxysilane, 3-mercaptopropyltrimethoxysilane, 3-mercaptopropylmethyldimethoxysilane and/or 3-mercaptopropyltriethoxysilane was used as a compound having a hydrolysable silane group.

8. A curable polymer mixture according to any one of claims 1 to 7, **characterised in that** the binder component 2.) is present in a quantity of < 80 % by weight, preferably < 60 % by weight, more preferably < 40 % by weight, based on the total weight of components 1.) to 4.) of the polymer mixture.

9. A curable polymer mixture according to any one of claims 1 to 8, **characterised in that** the binder component 2.) is based on at least one ethylenically unsaturated polyester and at least one ethylenically unsaturated monomer or on at least one (meth)acrylate resin selected from the group comprising polyacrylates, polymethacrylates, polyacrylamides, polymethacrylamides and copolymers of (meth)acrylates and (meth)acrylamides and at least one ethylenically unsaturated monomer and in each case optionally at least one cross-linking agent.

**10.** A curable polymer mixture according to claim 9, **characterised in that** up to 55 % by weight, preferably up to 45 % by weight, based on the total weight of binder component 2.), of at least one ethylenically unsaturated monomer is present.

**11.** A curable polymer mixture according to any one of claims 1 to 10, **characterised in that** it contains at least 60 % by weight, based on the total weight of components 1.) to 4.) of the polymer mixture, of fillers, preferably as inorganic fillers inorganic silicon-containing compounds, preferably in the form of grains of rock or cut fibres, and/or inorganic oxygen compounds of aluminium and/or magnesium, preferably aluminium oxides, aluminium hydroxides, aluminium oxide hydroxides and/or magnesium hydroxides.

**12.** A curable polymer mixture according to any one of claims 1 to 11, **characterised in that** the polymer mixture is a curable polymer concrete mixture.

**13.** Use of at least one addition product 1.) a) and/or 1.) b) according to any one of claims 1 to 7 as a coupling additive for the preparation of a curable polymer mixture according to claim 11, preferably a curable polymer concrete mixture according to claim 12, based on a system which can be cured by radical polymerisation according to any one of claims 8 to 10 as binder, which is provided with at least 20 % by weight, preferably at least 40 % by weight, more preferably at least 60 % by weight, based on the total weight of components 1.) to 4.) of the curable polymer mixture, of multiparticulate, distributable, inorganic fillers as aggregates and optionally conventional auxiliaries.

**14.** Process for the preparation of a curable polymer mixture, preferably a curable polymer concrete mixture, optionally as a moulding, **characterised in that** at least one coupling additive according to any one of claims 1 to 7 is mixed with a radically polymerisable system according to any one of claims 8 to 10, with multiparticulate, distributable, inorganic fillers as aggregates and optionally conventional auxiliaries and the polymer mixture is cured, optionally while being shaped, by polymerisation.

**15.** A cured polymer mixture, preferably a cured polymer concrete obtainable according to claim 14.

## Revendications

**1.** Composition de polymère durcissable, comprenant

1.) au moins un produit d'addition au moins oligomère a) d'au moins un aminosilane et/ou thiosilane, comportant au moins un groupe silane hydrolysable, sur au moins un composé qui comporte au moins deux doubles liaisons à insaturation éthylénique en bout de chaîne, en tant que seuls groupes terminaux, et/ou au moins un produit d'addition au moins oligomère b) d'au moins un isocyanate-silane et/ou époxysilane comportant au moins un groupe silane hydrolysable, sur au moins un composé oligomère comportant au moins trois motifs structuraux, qui comporte au moins un groupe hydroxy en bout de chaîne ou un groupe amino en bout de chaîne et au moins une double liaison à insaturation éthylénique en bout de chaîne, en tant qu'additif médiateur,
2.) au moins un système durcissable par polymérisation radicalaire, comprenant au moins un polymère à insaturation éthylénique et/ou une résine (méth)acrylique, au moins un monomère à insaturation éthylénique, au moins un amorceur de radicaux et éventuellement au moins un agent de réticulation, en tant que liant,
3.) au moins 20 % en poids, de préférence au moins 40 % en poids, par rapport au poids total des composants 1.) à 4.) de la composition de polymère, de charges inorganiques, de préférence multiparticulaires, en tant que granulats et
4.) éventuellement des adjuvants usuels.

**2.** Composition de polymère durcissable selon la revendication 1, **caractérisée en ce qu'**elle contient moins de 5 % en poids, de préférence moins de 1 % en poids, de façon particulièrement préférée moins de 0,5 % en poids, par rapport au poids total des composants 1.) à 4.) de la composition de polymère, du composant additif médiateur 1.).

**3.** Composition de polymère durcissable selon la revendication 1 ou 2, **caractérisée en ce que** pour la préparation du produit d'addition a) on a utilisé comme composé comportant au moins deux doubles liaisons à insaturation éthylénique en bout de chaîne des composés à groupes acrylate, méthacrylate et/ou allyle en bout de chaîne, au moins un groupe en bout de chaîne étant présent sous forme d'un groupe acrylate en bout de chaîne ou méthacrylate en bout de chaîne, de préférence d'un groupe acrylate en bout de chaîne,
et

pour la préparation du produit d'addition b) on a utilisé comme composés oligomères comportant au moins une double liaison à insaturation éthylénique en bout de chaîne un composé oligomère comportant un groupe acrylate, méthacrylate ou allyle en bout de chaîne, de préférence au moins un groupe acrylate en bout de chaîne, et au moins un groupe amino ou hydroxy en bout de chaîne.

**4.** Composition de polymère durcissable selon l'une quelconque des revendications 1 à 3, **caractérisée en ce qu'**on a utilisé pour la préparation du produit d'addition a) un composé au moins oligomère, de préférence polymère, en tant que composé à groupes comportant au moins deux doubles liaisons à insaturation éthylénique en bout de chaîne et pour la préparation du produit d'addition b) un composé polymère en tant que composé à groupe comportant au moins une double liaison à insaturation éthylénique en bout de chaîne et au moins un groupe hydroxy ou amino en bout de chaîne.

**5.** Composition de polymère durcissable selon l'une quelconque des revendications 1 à 4, **caractérisée en ce qu'**en tant que composé comportant au moins une ou, respectivement, comportant au moins deux doubles liaisons à insaturation éthylénique on a utilisé un polyéther, un polyester saturé, un polyamide, un polyester-amide saturé et/ou un polyester-polyéther saturé correspondant.

**6.** Composition de polymère durcissable selon l'une quelconque des revendications 1 à 5, **caractérisée en ce qu'**en tant que composé comportant au moins un groupe siloxane hydrolysable on a utilisé un composé de formule générale

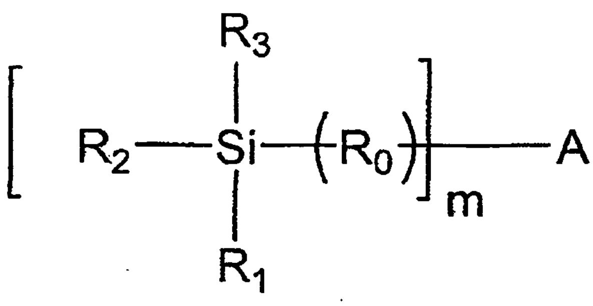

dans laquelle

A représente un groupe époxyde, un groupe glycidyloxy, un groupe isocyanate, un groupe -SH, ou un groupe -N(H)-X, X représentant un atome d'hydrogène, un radical alkyle ayant de 1 à 6 atomes de carbone, un radical aryle ayant de 6 à 10 atomes de carbone ou un radical cycloalkyle ayant de 4 à 6 atomes de carbone, où chacun de ces radicaux X peut être substitué par un groupe amino primaire ou secondaire, ou représentant une liaison lorsque m est un nombre entier 2,
$R_0$ représente un radical alkylène ayant de 1 à 12 atomes de carbone, un radical cycloalkylène ayant de 4 à 6 atomes de carbone ou un radical arylène ayant de 6 à 10 atomes de carbone,
$R_1$ représente un radical alkyle ayant de 1 à 3 atomes de carbone, un halogène, un groupe $-O-C(=O)-R_4$ ou un groupe $-OR_4$, $R_4$ représentant un atome d'hydrogène ou un radical alkyle ayant de 1 à 3 atomes de carbone,
$R_2$ représente un radical alkyle ayant de 1 à 3 atomes de carbone, un groupe $-O-C(=O)-R_4$, un halogène ou un groupe $-OR_4$, $R_4$ représentant un atome d'hydrogène ou un radical alkyle ayant de 1 à 3 atomes de carbone,
$R_3$ représente un groupe $-O-C(=O)-R_4$, un halogène ou un groupe $-OR_4$, $R_4$ représentant un radical alkyle ayant de 1 à 3 atomes de carbone,

et

m représente un nombre entier 1 ou 2.

**7.** Composition de polymère durcissable selon la revendication 1, **caractérisée en ce qu'**en tant que composé comportant un groupe silane hydrolysable on a utilisé le 3-aminopropyltriméthoxysilane, le 3-amino-propylméthyldiéthoxysilane, le 3-aminopropyldiméthyl-éthoxysilane, le 3-aminopropyltriéthoxysilane, la bis(triméthoxysilylpropyl) amine, le 3-(aminoéthyl)-aminopropyltriméthoxysilane, le 3-(méthylamino)propyl-triméthoxysilane, le 3-isocyanatopropyltriméthoxy-silane, le 3-isocyanatopropyltriéthoxysilane, le 3-mercaptopropyltriméthoxysilane, le 3-mercaptopropyl-méthyldiméthoxysilane et/ou le 3-mercaptopropyl-triéthoxysilane.

**8.** Composition de polymère durcissable selon l'une quelconque des revendications 1 à 7, **caractérisée en ce que** le composant-liant 2.) est présent en une quantité < 80 % en poids, de préférence < 60 % en poids, de façon particulièrement préférée < 40 % en poids, par rapport au poids total des composants 1.) à 4.) de la composition de polymère.

**9.** Composition de polymère durcissable selon l'une quelconque des revendications 1 à 8, **caractérisée en ce que** le composant-liant 2.) est à base d'au moins un polyester à insaturation éthylénique et d'au moins un monomère à insaturation éthylénique ou à base d'au moins une résine (méth)acrylique choisie dans le groupe comprenant des polyacrylates, des polyméthacrylates, des polyacrylamides, des polyméthacrylamides et des copolymères de (méth) acrylates et des (méth)acrylamides et d'au moins un monomère à insaturation éthylénique et chaque fois éventuellement d'au moins un agent de réticulation.

**10.** Composition de polymère durcissable selon la revendication 9, **caractérisée en ce que** sont présents jusqu'à 55 % en poids, de préférence jusqu'à 45 % en poids, par rapport au poids total du composant-liant 2.), d'au moins un monomère à insaturation éthylénique.

**11.** Composition de polymère durcissable selon l'une quelconque des revendications 1 à 10, **caractérisée en ce qu'**elle contient au moins 60 % en poids, par rapport au poids total des composants 1.) à 4.) de la composition de polymère, de charges, de préférence en tant que charges inorganiques des composés inorganiques siliciés, de préférence sous forme de grenailles ou de fibres coupées, et/ou des composés oxygénés inorganiques d'aluminium et/ou de magnésium, de préférence des oxydes d'aluminium, des hydroxydes d'aluminium, des oxyde-hydroxydes d'aluminium et/ou des hydroxydes de magnésium.

**12.** Composition de polymère durcissable selon l'une quelconque des revendications 1 à 11, **caractérisée en ce que** la composition de polymère est une composition de béton polymère durcissable.

**13.** Utilisation d'au moins un produit d'addition 1.)a) et/ou 1.)b) selon l'une quelconque des revendications 1 à 7, en tant qu'additif médiateur, pour la préparation d'une composition de polymère durcissable selon la revendication 11, de préférence d'une composition de béton polymère durcissable selon la revendication 12, à base d'un système durcissable par polymérisation radicalaire selon l'une quelconque des revendications 8 à 10 en tant que liant, qui est muni d'au moins 20 % en poids, de préférence d'au moins 40 % en poids, de façon particulièrement préférée d'au moins 60 % en poids, par rapport au poids total des composants 1.) à 4.), de la composition de polymère durcissable, de charges inorganiques multiparticulaires dispersables en tant que granulats et éventuellement d'adjuvants usuels.

**14.** Procédé pour la préparation d'une composition de polymère durcissable, de préférence d'une composition de béton polymère durcissable, éventuellement sous forme de corps moulé, **caractérisée en ce qu'**on mélange au moins un additif médiateur selon l'une quelconque des revendications 1 à 7 avec un système polymérisable par voie radicalaire selon l'une quelconque des revendications 8 à 10, avec des charges inorganiques multiparticulaires dispersables en tant que granulats et éventuellement des adjuvants usuels et on fait durcir par polymérisation la composition de polymère, éventuellement avec mise en forme.

**15.** Composition de polymère durcie, de préférence béton polymère durci, pouvant être obtenue selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4650889 A
- JP 62275048 A
- WO 9828307 A
- EP 0451709 A
- EP 0224122 A
- US 3681287 A


### In der Beschreibung aufgeführte Nicht-Patentliteratur


- *Macromolecules,* 2001, vol. 34, 5778-5785
- **E. Brandau.** Duroplastwerkstoffe. VCH Verlagsgesellschaft, 1993
- **J. H. Aurer ; A. Kasper.** Unsaturated Polyester Resins. Verlag Moderne Industrie, 2003
- **G. Kannebley et al.** AVK-TV Handbuch. 2004, vol. I, II
- **E. Brandau.** Duroplastwertwerkstoffe. VCH Verlagsgesellschaft, 1993
- **R. Bums.** Polyester Molding Compounds. Marcel Dekker Inc, 1982